# EUROPEAN PATENT APPLICATION

(11) **EP 4 518 202 A1**
(43) Date of publication of application: **05.03.2025**
(21) Application number: 22939033.1
(22) Date of filing: 27.04.2022
(51) Int. Cl.: H04L 1/00

(54) **METHOD FOR DETERMINING TRANSMISSION CONFIGURATION INDICATION STATE AND APPARATUS**

(71) Applicant: Beijing Xiaomi Mobile Software Co., Ltd., Beijing 100085 (CN)
(72) Inventor: LI, Mingju, Beijing 100085 (CN)
(74) Representative: Hersina, Günter
(86) International application number: PCT/CN2022/089679
(87) International publication number: WO 2023/206180

(57) **Abstract**

A method for determining a transmission configuration indication (TCI) state and an apparatus. The method executed by a terminal device comprises: receiving first indication information, wherein the first indication information is used for indicating at least two sets of TCI states; and determining a TCI state for channel and/or signal transmission according to a configuration for the channel and/or signal. Hence, after the terminal device receives the at least two sets of TCI states, the TCI state for the channel and/or signal transmission is determined according to the configuration for the channel and/or signal, so that the TCI state used for the channel and/or signal transmission and determined by the terminal devices is consistent with that determined by a network device, the transmission reliability is ensured, and the transmission quality is improved.

## Description

### TECHNICAL FIELD

The present disclosure relates to the technical field of communication, in particular to a method and an apparatus for determining a transmission configuration indication (TCI) state.

### BACKGROUND

In a communication system, in order to ensure a coverage range, it is required to adopt sending and receiving based on a beam.

In a related system, in order to reduce signaling overhead, a unified transmission configuration indication (TCI) state may be used to perform separate indication for downlink and uplink or perform joint indication for downlink and uplink. In a case that multiple sets of TCI states are indicated through signal downlink control information (DCI), how a terminal determines the set of TCI states to be used for a transmission to ensure that the terminal and the network device have the same understanding of adopting the TCI state has become an urgent problem to be solved.

### SUMMARY

Embodiments of the present disclosure provide a method and an apparatus for determining a transmission configuration indication (TCI) state.

A first aspect of the embodiments of the present disclosure provides a method for determining a TCI state, performed by a terminal, and the method includes: receiving first indication information, in which the first indication information is configured to indicate at least two sets of TCI states; and determining, according to a configuration for a channel and/or a signal, a TCI state for a transmission of the channel and/or the signal.

In the present disclosure, after the terminal receives at least two set of TCI states sent by a network device, the terminal may determine the TCI state for the transmission of the channel and/or the signal according to the configuration for the channel and/or the signal, so that the TCI state for the transmission of the channel and/or the signal determined by the terminal is consistent with that determined by the network device, thus ensuring transmission reliability and improving transmission quality.

A second aspect of the embodiments of the present disclosure provides a method for determining a TCI state, performed by a network device, and the method includes: sending first indication information to a terminal, in which the first indication information is configured to indicate at least two sets of TCI states; and determining, according to a configuration for a channel and/or a signal in the terminal, a TCI state for a transmission of the channel and/or the signal.

In the present disclosure, after the network device sends at least two set of TCI states to the terminal, the network device may determine the TCI state for the transmission of the channel and/or the signal according to the configuration for the channel and/or the signal, so that the TCI state for the transmission of the channel and/or the signal determined by the terminal is consistent with that determined by the network device, thus ensuring transmission reliability and improving transmission quality.

A third aspect of the embodiments of the present disclosure provides a communication apparatus, applied to a terminal, including: a transceiver module, configured to receive first indication information, in which the first indication information is configured to indicate at least two sets of TCI states; and a processing module, configured to determine, according to a configuration for a channel and/or a signal, a TCI state for a transmission of the channel and/or the signal.

A fourth aspect of the embodiments of the present disclosure provides a communication apparatus applied to a network device, and the communication apparatus includes: a transceiver module, configured to send first indication information to a terminal, in which the first indication information is configured to indicate at least two sets of TCI states; and a processing module, configured to determine, according to a configuration for a channel and/or a signal in the terminal, a TCI state for a transmission of the channel and/or the signal.

A fifth aspect of the embodiments of the present disclosure provides a communication apparatus including a processor. When the processor calls computer programs in a memory, the method provided in the aforementioned first aspect is implemented.

A sixth aspect of the embodiments of the present disclosure provides a communication apparatus including a processor. When the processor calls computer programs in a memory, the method provided in the aforementioned second aspect is implemented.

A seventh aspect of the embodiments of the present disclosure provides a communication apparatus including a processor and a memory. The memory has computer programs stored therein, the processor is configured to execute the computer programs stored in the memory, to cause the communication apparatus to perform the method provided in the aforementioned first aspect.

An eighth aspect of the embodiments of the present disclosure provides a communication apparatus including a processor and a memory. The memory has computer programs stored therein, the processor is configured to execute the computer programs stored in the memory, to cause the communication apparatus to perform the method provided in the aforementioned second aspect.

A ninth aspect of the embodiments of the present disclosure provides a communication apparatus including a processor and an interface circuit. The interface circuit is configured to receive code instructions and transmit the code instructions to the processor, the processor is configured to execute the code instructions, to cause the communication apparatus to perform the method provided in the aforementioned first aspect.

A tenth aspect of the embodiments of the present disclosure provides a communication apparatus including a processor and an interface circuit. The interface circuit is configured to receive code instructions and transmit the code instructions to the processor, the processor is configured to execute code instructions, to cause the communication apparatus to perform the method provided in the aforementioned second aspect.

An eleventh aspect of the embodiments of the present disclosure provides a communication system. The communication system includes the communication apparatus of the third aspect and the communication apparatus of the fourth aspect; or the communication system includes the communication apparatus of the fifth aspect and the communication apparatus of the sixth aspect; or the communication system includes the communication apparatus of the seventh aspect and the communication apparatus of the eighth aspect; or the communication system includes the communication apparatus of the ninth aspect and the communication apparatus of the tenth aspect.

A twelfth aspect of the embodiments of the present disclosure provides a computer-readable storage medium. The computer-readable storage medium is configured to store instructions used by the above network device. When the instructions are executed, the terminal is caused to implement the method of the first aspect.

A thirteenth aspect of the embodiments of the present disclosure provides a computer-readable storage medium. The computer-readable storage medium is configured to store instructions used by the above terminal. When the instructions are executed, the network device is caused to implement the method of the second aspect.

A fourteenth aspect of the embodiments of the present disclosure provides a computer program product including computer programs. When the computer programs are executed by a computer, the computer is caused to implement the method of the first aspect.

A fifteenth aspect of the embodiments of the present disclosure provides a computer program product including computer programs. When the computer programs are executed by a computer, the computer is caused to implement the method of the second aspect.

A sixteenth aspect of the embodiments of the present disclosure provides a chip system. The chip system includes at least one processor and an interface for supporting the network device in realizing the functions involved in the first aspect, e.g., determining or processing at least one of data or information involved in the method described above. In a possible design, the chip system further includes a memory. The memory is configured to store necessary computer programs and data of the source secondary node. The chip system may consist of chips or may include a chip and other discrete devices.

A seventeenth aspect of the embodiments of the present disclosure provides a chip system. The chip system includes at least one processor and an interface for supporting the terminal in realizing the functions involved in the second aspect, e.g., determining or processing at least one of data or information involved in the method described above. In a possible design, the chip system further includes a memory. The memory is configured to store necessary computer programs and data of the source master node. The chip system may consist of chips or may include a chip and other discrete devices.

An eighteenth aspect of the embodiments of the present disclosure provides a computer program. When the computer program is running on a computer, the computer is caused to implement the method of the first aspect.

A nineteenth aspect of the embodiments of the present disclosure provides a computer program. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic structural diagram of a communication system according to an embodiment;
FIG. 2 is a schematic flowchart of a method for determining a transmission configuration indication (TCI) state according to an embodiment;
FIG. 3 is a schematic flowchart of a method for determining a TCI state according to an embodiment;
FIG. 4 is a schematic flowchart of a method for determining a TCI state according to an embodiment;
FIG. 5 is a schematic flowchart of a method for determining a TCI state according to an embodiment;
FIG. 6 is a schematic flowchart of a method for determining a TCI state according to an embodiment;
FIG. 7 is a schematic flowchart of a method for determining a TCI state according to an embodiment;
FIG. 8 is a schematic flowchart of a method for determining a TCI state according to an embodiment;
FIG. 9 is a schematic flowchart of a method for determining a TCI state according to an embodiment;
FIG. 10 is a schematic flowchart of a method for determining a TCI state according to an embodiment;
FIG. 11 is a schematic flowchart of a method for determining a TCI state according to an embodiment;
FIG. 12 is a schematic block diagram of a communication apparatus according to an embodiment;
FIG. 13 is a schematic block diagram of a communication apparatus according to an embodiment; and
FIG. 14 is a schematic block diagram of a chip according to an embodiment.

### DETAILED DESCRIPTION

For ease of understanding, the terms involved in the disclosure are introduced firstly.

### 1. Transmission configuration indication (TCI)

The TCI is used to inform a user that a receiving space parameter/information for receiving a physical downlink control channel (PDCCH), a physical downlink shared channel (PDSCH) is the same as that for receiving which synchronization signal block (SSB) or channel state information reference signal (CSI-RS) sent by a network device, or inform the user that a sending space parameter/information for sending a physical uplink control channel (PUCCH), a physical uplink shared channel (PUSCH) is the same as that for sending which synchronization signal block (SSB) or channel state information reference signal (CSI-RS).

### 2. Downlink control information (DCI)

The DCI, carried by a PDCCH, and sent by the network device to the terminal, includes uplink and downlink resource assignment, hybrid automatic repeat reQuest (HARQ) information, power control and so on.

In order to better understand a method for determining a TCI state disclosed in the embodiments of the present disclosure, a communication system to which the embodiments of the present disclosure can be applied is first described below.

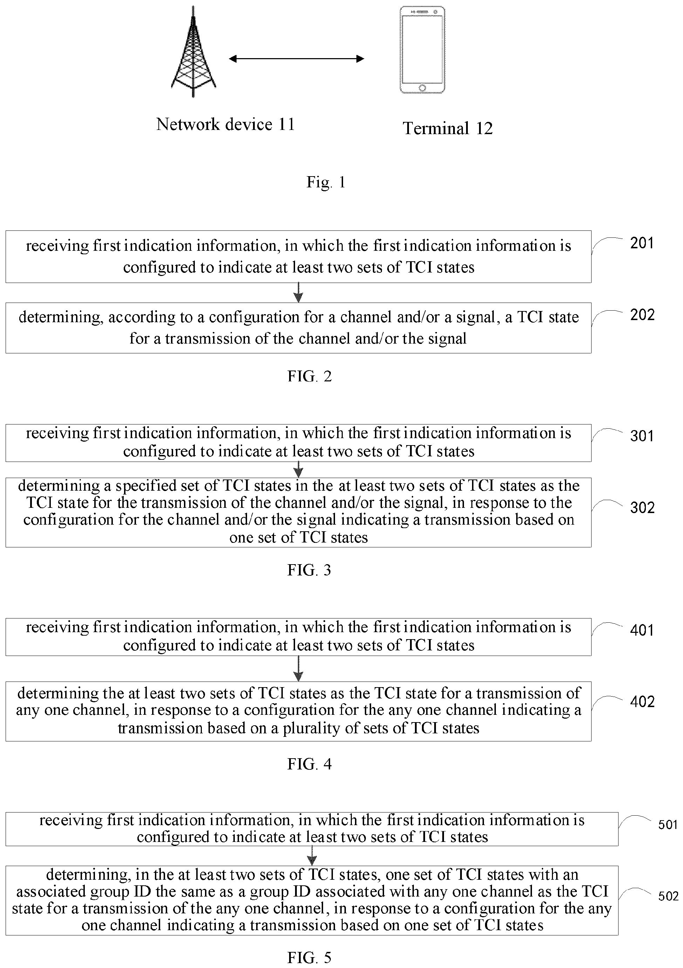

Referring to FIG. 1, FIG. 1 shows a schematic structural diagram of a communication system provided according to an embodiment of the present disclosure. The communication system can include, but is not limited to one network device and one terminal, the number and form of devices shown in FIG. 1 are only intended to illustrate, rather than to constitute limitations on the embodiments of the present application. In actual applications, two or more network devices and two or more terminals can be included. The communication system shown in FIG. 1 is illustrated to include one network device 11 and one terminal 12.

It should be noted that the technical solutions of the embodiments of the present disclosure can be applied to various communication systems, for example, a long term evolution (LTE) system, a 5th generation (5G) mobile communication system, a 5G new radio (NR) system, or other future novel mobile communication systems.

The network device 11 in the embodiments of the present disclosure is an entity for transmitting or receiving signals at a network side. For example, the network device 11 can be an evolved NodeB (eNB), a transmission reception point (TRP), a next generation NodeB (gNB) in the NR system, a base station in other future mobile communication systems or an access point in a wireless fidelity (WiFi) system, etc. In the embodiments of the present disclosure, a specific technology and a specific device form that are adopted by the network device are not limited. The network device provided in the embodiments of the present disclosure can be composed of a central unit (CU) and a distributed unit (DU), and the CU can also be referred to as a control unit, the protocol layer of the network side device, such as a base station, can be split by adopting a CU-DU structure, parts of functions of the protocol layer are centrally controlled by the CU, and parts or all of remaining functions of the protocol layer are distributed in the DU, and the DU is centrally controlled by the CU.

The terminal 12 in the embodiments of the present disclosure is an entity, such as a mobile phone, for receiving or transmitting signals. The terminal can also be referred to as a terminal, user equipment (UE), a mobile station (MS), a mobile terminal (MT), etc. The terminal can be a car with a communication function, a smart car, a mobile phone, a wearable device, a tablet computer (Pad), a computer with a radio transceiver function, a virtual reality (VR) terminal, an augmented reality (AR) terminal, a radio terminal in industrial control, a radio terminal in self-driving, a radio terminal in remote medical surgery, a radio terminal in a smart grid, a radio terminal in transportation safety, a radio terminal in a smart city, a radio terminal in a smart home, etc. In the embodiments of the present disclosure, a specific technology and a specific device form that are adopted by the terminal are not limited.

It can be understood that the communication system described in the embodiments of the present disclosure is intended to describe the technical solutions in the embodiments of the present disclosure more clearly, rather than to constitute a limitation on the technical solutions provided in the embodiments of the present disclosure. It can be known by those of ordinary skill in the art that, with the evolution of a system architecture and the emergence of new service scenarios, the technical solutions provided in the embodiments of the present disclosure is equally applicable to similar technical problems.

In the present disclosure, in a case that a signal DCI indicates multiple sets of TCI states, for a problem that how a terminal determines the set of TCI states to be used for a transmission to ensure that the terminal and the network device have the same understanding of adopting the TCI state and to ensure transmission reliability, a method for determining a TCI state according to a configuration for a channel and/or a signal is proposed, so that the terminal and the network device have the same understanding of adopting the TCI state and thus ensuring the transmission reliability.

It can be understood that, in the present disclosure, the method for determining a TCI state provided by any embodiment may be performed alone or in combination with any of the embodiments or possible implementations of the embodiments in the disclosure, or in combination with any of the technical solutions in the related art.

Reference is now made to FIG. 2, which is a schematic flowchart of a method for determining a TCI state provided by an embodiment of the present disclosure. As shown in FIG. 2, the method is performed by a terminal, and may include, but is not limited to, the following steps.

At step 201, first indication information is received. The first indication information is configured to indicate at least two sets of TCI states.

A set of TCI states refers to one TCI state, or a pair of TCI states. For example, a set of TCI states can be a joint TCI state (also referred as to DLorjointTCIstate), or a separate downlink (DL) TCI state, or a separate uplink (UL) TCI state; or can be a separate DL TCI state and a separate UL TCI state, etc., which is not limited in the present disclosure.

Optionally, the first indication information may be a medium access control (MAC) control element (CE), that is, at least two sets of TCI states associated with a codepoint are activated through the MAC CE.

Optionally, the first indication information may also be MAC CE and DCI. In other words, at least one set of TCI states associated with each of multiple codepoints is directly activated through the MAC CE, and the DCI indicates one of the multiple codepoints, and the one codepoint is associated with at least two sets of TCI states.

At step 202, a TCI state for a transmission of a channel and/or a signal is determined according to a configuration for the channel and/or the signal.

The channel includes at least one of the following: a PDCCH, a PDSCH, a PUCCH, or a PUSCH. The signal includes at least one of the following: a channel state information reference signal (CSI RS) or a sounding reference signal (SRS).

Optionally, each of the above signals can be any of the following types: periodic, semi-persistent, or aperiodic.

In addition, at least one set of TCIs in the at least two sets of TCI states indicated by the first indication information includes a joint TCI state (also referred to as DLorjointTCIstate), that is, the joint TCI state can be used for both uplink and downlink channels/reference signals.

Alternatively, at least one set of TCIs in the at least two sets of TCI states includes a separate UL TCI state and/or a separate DL TCI state.

The configuration for the channel and/or the signal is used to describe whether the channel and signal are transmitted based on one set of TCI states or based on multiple sets of TCI states.

Optionally, in the disclosure, the number of transmission-based TCI states may be determined according to the number of transmission reception points (TRPs) configured by the channel and/or the signal. For example, if the CSI RS and SRS are respectively configured with a single (S) TRP, it can be determined that their configuration indicates a transmission based on one set of TCI states; or if the PDCCH channel is configured with multiple (M) TRPs, then it can be determined that the configuration of the PDCCH indicates a transmission based on multiple sets of TCI states, or the like.

Optionally, each of the above signals can be transmitted based on S-TRP, that is, the configuration of each signal indicates the transmission based on one set of TCI states.

Optionally, for a channel configured with multiple sets of TCI states, it may be directly determined that the TCI states used for a transmission on the channel are at least two sets of TCI states indicated by the first indication information.

For a channel and/or a signal configured to be based on one set of TCI states, one set of TCI states for a transmission of the channel and/or the signal can be determined from at least two sets of TCI states indicated by the first indication information. For example, a specified set of TCI states in the first indication information may be determined as the TCI state for the transmission of the channel and/or the signal.

In the disclosure, after receiving at least two sets of TCI states indicated by the network device, the terminal can determine the TCI state for its transmission according to the configuration of the channel and/or the signal. As a result, the TCI state for the transmission of the channel and/or the signal determined by the terminal is consistent with that determined by the network device, thus ensuring transmission reliability and improving transmission quality.

Reference is now made to FIG. 3, which is a schematic flowchart of a method for determining a TCI state provided by an embodiment of the present disclosure. As shown in FIG. 3, the method is performed by a terminal, and may include, but is not limited to, the following steps.

At step 301, first indication information is received. The first indication information is configured to indicate at least two sets of TCI states.

For the specific implementation of the above step 301, reference can be made to the detailed description of any embodiment of the present disclosure, and will not be described again here.

At step 302, in response to a configuration for a channel and/or a signal indicating a transmission based on one set of TCI states, a specified set of TCI states in the at least two sets of TCI states is determined as a TCI state for a transmission of the channel and/or the signal.

Optionally, the specified TCI state may be any of the following: a first set of TCI states in the first indication information, or a set of TCI states associated with a specified group identity document (ID).

The first set of TCI states may be a set of TCI states located at a least bit field position in the first indication information.

For example, the first set of TCI states may be a set of TCI states located at the least bit field position in the MAC CE.

Alternatively, the first set of TCI states may also be a set of TCI states with a smallest TCI state ID in the first indication information.

Optionally, the first indication information includes a group identity document (ID) or index associated with each set of TCI states. Therefore, after receiving the first indication information, the terminal can determine the set of TCI states associated with a specified group ID in the first indication information as the TCI state for the transmission of the channel and/or the signal based on one set of TCI states.

The group ID includes at least one of the following: a control resource set (CORESET) pool index, a CORESET group ID, a PUCCH group ID, a PUSCH group ID, or a PDSCH group ID.

That is to say, the first indication information may include the CORESET Pool Index or CORESET group ID or PUCCH group ID or PUSCH group ID or PDSCH group ID associated with each set of TCI states.

In the disclosure, after receiving at least two sets of TCI states indicated by the network device, the terminal can determine, for the channel and/or the signal with the configuration indicating based on one set of TCI states, that the TCI state for its transmission is a specified set of TCI states in the at least two sets of TCI states. As a result, the TCI state for the transmission of the channel and/or the signal determined by the terminal is consistent with that determined by the network device, thus ensuring transmission reliability and improving transmission quality.

Reference is now made to FIG. 4, which is a schematic flowchart of a method for determining a TCI state provided by an embodiment of the present disclosure. As shown in FIG. 4, the method is performed by a terminal, and may include, but is not limited to, the following steps.

At step 401, first indication information is received. The first indication information is configured to indicate at least two sets of TCI states.

For the specific implementation of the above step 401, reference can be made to the detailed description of any embodiment of the present disclosure, and will not be described again here.

At step 402, in response to a configuration for any one channel indicating a transmission based on multiple sets of TCI states, the at least two sets of TCI states are determined as TCI states for a transmission of the any one channel.

Optionally, among PDCCH, PDSCH, PUCCH and PUSCH, the configuration for at least one channel may indicate the transmission based on one set of TCI states, or the configuration for at least one channel may also indicate the transmission based on multiple sets of TCI states.

For example, the combination of configurations for respective channels can be as follows: S-TRP PDCCH and M-TRP PDSCH; S-TRP PDSCH and M-TRP PDCCH; S-TRP PDCCH and M-TRP PUSCH; S-TRP PUSCH and M-TRP PDCCH; S TRP PUSCH and M-TRP PDSCH; S-TRP PDSCH and M-TRP PUSCH; S-TRP PDCCH, M-TRP PDSCH and M-TRP PUSCH; S-TRP PDCCH, M-TRP PDSCH and M-TRP PUCCH; S-TRP PDCCH, S-TRP PUCCH, M-TRP PDSCH and M-TRP PUSCH; S-TRP PDCCH, M-TRP PUCCH, M-TRP PDSCH and M-TRP PUSCH, etc.

The M-TRP PDCCH refers to that the PDCCH can be configured with two search space (SS) sets with a link relationship. The PDCCH candidates with the same PDCCH candidate number in the two SS sets are used to transmit one PDCCH. Each SS set is associated with its respective CORESET. Alternatively, M-TRP PDCCH can also be configured with a single frequency network (SFN) method, that is, one CORESET is configured with two TCI states, and any one PDCCH candidate of the CORESET is associated with two TCI states.

The M-TRP PDSCH refers to that the PDSCH is configured with a repetition scheme or a repetition number or two code division multiplexing (CDM) groups. The repetition scheme includes at least one of the following: frequency division multiplexing (FDM) scheme A, FDM scheme B, or time division multiplexing (TDM) scheme A.

The M-TRP PUSCH refers to that the PUSCH is associated with at least one of the following: two SRS resource indicators, two layer fields, two PUSCH precoder fields or two SRS resource sets.

The M-TRP PUCCH refers to that the PUCCH is associated with at least one of the following: two spatial relationship information (spatial-relation-info), two TCI states (including separate UL TCI state or a joint TCI state) or two power control parameter sets.

For different combinations of configurations of channels, the terminal can use different methods to determine the TCI state for the transmission of the channel based on one set of TCI states.

For example, if among the above four channels, the configuration of each channel is based on multiple sets of TCI states, the terminal can determine at least two sets of TCI states indicated by the first indication channel as TCI states for the transmission of each channel.

In the disclosure, after receiving at least two sets of TCI states indicated by the network device, the terminal can determine, for the channel with the configuration indicating the transmission based on multiple sets of TCI states, that the TCI state for its transmission is the indicated at least two sets of TCI states. As a result, the TCI state for the transmission of the channel and/or the signal determined by the terminal is consistent with that determined by the network device, thus ensuring transmission reliability and improving transmission quality.

Reference is now made to FIG. 5, which is a schematic flowchart of a method for determining a TCI state provided by an embodiment of the present disclosure. As shown in FIG. 5, the method is performed by a terminal, and may include, but is not limited to, the following steps.

At step 501, first indication information is received. The first indication information is configured to indicate at least two sets of TCI states.

For the specific implementation of the above step 501, reference can be made to the detailed description of any embodiment of the present disclosure, and will not be described again here.

At step 502, in response to a configuration for any one channel indicating a transmission based on one set of TCI states, one set of TCI states with an associated group ID the same as a group ID associated with the any one channel in the at least two sets of TCI states is determined as a TCI state for a transmission of the any one channel.

For example, if a configuration of the PDCCH is S-TRP and the first indication information includes the group ID associated with each set of TCI states, then it can be determined that the set of TCI states whose associated group ID is the same as the group ID associated with the PDCCH is the TCI state for a transmission of the PDCCH.

Optionally, if the configuration for the channel indicates a transmission based on one set of TCI states for at least one first channel, and a transmission based on multiple sets of TCI states for at least one second channel, it can be determined that at least two sets of TCI states are the TCI state for a transmission of the at least one second channel, and a set of TCI states for a transmission of the at least one first channel is determined based on additional information.

For example, the configuration for the channel may be any of the following combinations: the configuration of the PDCCH indicates a transmission based on multiple sets of TCI states, and the configuration of at least one of the remaining channels indicates a transmission based on one set of TCI states; or the configuration of the PDSCH indicates a transmission based on multiple sets of TCI states, and the configuration of the PUSCH and/or PUCCH indicates a transmission based on one set of TCI state; or, the configuration of the PUSCH and/or PUCCH indicates a transmission based on multiple sets of TCI state, and the configuration of the PDSCH indicates a transmission based on one set of TCI state; or, the configuration of the PUSCH indicates a transmission based on multiple sets of TCI state, and the configuration of the PUCCH indicates a transmission based on one set of TCI state; or the configuration of the PUSCH indicates a transmission based on one set of TCI state, and the configuration of the PUCCH indicates a transmission based on multiple sets of TCI state, etc.

It should be noted that the above combination is only a schematic description and cannot be used as a restrictive description of determining the TCI state for the transmission of the channel in the disclosure.

Optionally, the additional information may be any of the following: a group ID associated with at least one channel; a codepoint value in an indication field for indicating an SRS resource set index in DCI; information indicated by used an information field for indicating downlink assignment in the DCI; information indicated by a newly added information field in the DCI.

Optionally, the additional indication information may also be MAC CE or RRC. The additional indication information may also be other information fields in the first indication information.

For example, when the configuration of the PUSCH is S-TRP, the additional indication information may reuse the codepoint value in the indication field in DCI format 0_1 and DCI format 0_2 that is used to indicate the SRS resource set index. The set of TCI states indicated by the codepoint value is used for the PUSCH transmission. For example, the codepoint value indicates that the SRS resource indicator field and precoding information and number of layers field is associated with the first SRS resource set, it means that the first set of TCI states is used. If the codepoint value indicates that the SRS resource indicator field and precoding information and number of layers field is associated with the second SRS resource set, it means that the second set of TCI states is used, or vice versa.

Or, when the configuration of the PDSCH is S-TRP, and the first indication information is DCI format 1_1 and 1_2, and there is no downlink configuration (i.e., without DL assignment), the information field used to indicate DL assignment in the DCI can be reused to indicate which set of TCI states is used for the PDSCH.

Alternatively, when the first indication information is DCI format 1_1 and 1_2 with DL assignment, a new indication field may also be added to indicate which set of TCI states is used for the channel based on one set of TCI states.

In the disclosure, after receiving at least two sets of TCI states indicated by the network device, the terminal can determine, for the channel with the configuration indicating the transmission based on multiple sets of TCI states, that the TCI state for its transmission is the indicated at least two sets of TCI states. As a result, the TCI state for the transmission of the channel and/or the signal determined by the terminal is consistent with that determined by the network device, thus ensuring transmission reliability and improving transmission quality.

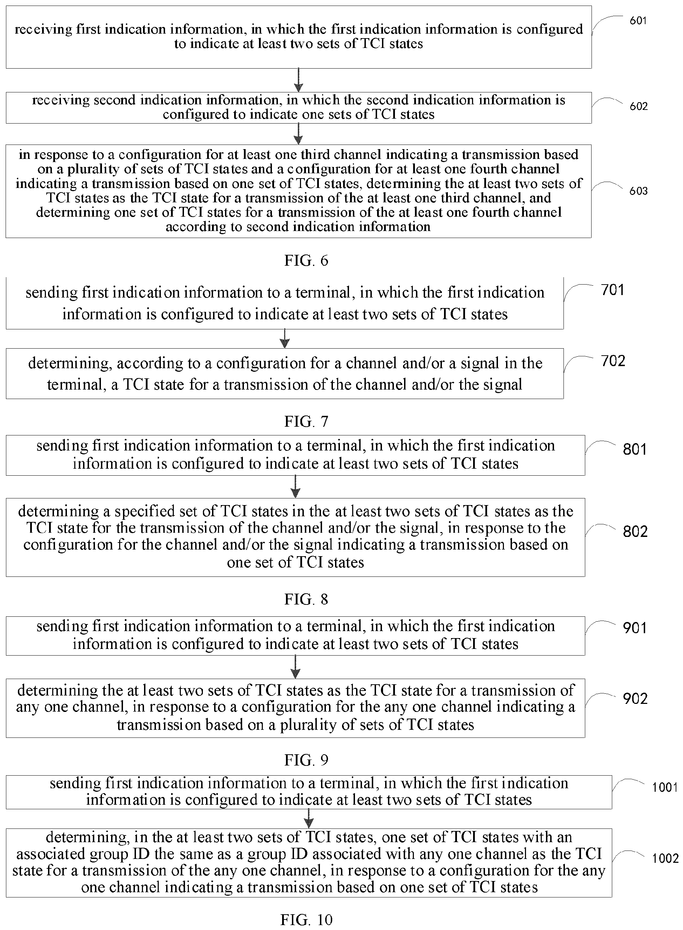

Reference is now made to FIG. 6, which is a schematic flowchart of a method for determining a TCI state provided by an embodiment of the present disclosure. As shown in FIG. 6, the method is performed by a terminal, and may include, but is not limited to, the following steps.

At step 601, first indication information is received. The first indication information is configured to indicate at least two sets of TCI states.

For the specific implementation of the above step 601, reference can be made to the detailed description of any embodiment of the present disclosure, and will not be described again here.

At step 602, second indication information is received. The second indication information is configured to indicate one set of TCI states.

The first indication information and/or the second indication information may respectively be any one of the following: MAC CE; DCI and MAC CE. The manner in which different types of indication information indicate the TCI state may refer to the description of any embodiment of the present disclosure, and will not be described again here.

At step 603, in response to a configuration for at least one third channel indicating a transmission based on multiple sets of TCI states and a configuration for at least one fourth channel indicating a transmission based on one set of TCI states, the at least two sets of TCI states are determined as TCI states for a transmission of the third channel, and a set of TCI states for the a transmission of the at least one fourth channel transmission is determined according to the second indication information.

**In** the disclosure, if the terminal receives both the second indication information indicating one set of TCI states and the first indication information indicating at least two sets of TCI states, the terminal can determine the one set of TCI states in the second indication information as the TCI state for the transmission of the fourth channel, and the at least two sets of TCI states in the first indication information as TCI states for the transmission of the third channel.

The at least one channel with the configuration indication the transmission based on multiple sets of TCI states can be at least one of PDCCH, PUCCH, PDSCH, or PUSCH. Correspondingly, in the remaining channels other than the above at least one channel with the configuration indication the transmission based on multiple sets of TCI states, the configuration of at least one channel can indicate the transmission based on one set of TCI states. The above four channels are respectively configured with the transmission based on several sets of TCI states, which can be arbitrarily combined as needed, and not limited in the disclosure.

For example, if the configuration of the PDCCH is M-TRP, the PDCCH may be configured with two search space (SS) sets with a link relationship, and the PDCCH candidates with the same PDCCH candidate number in the two SS sets are used for transmitting one PDCCH, each SS set is associated with its respective CORESET. Alternatively, the M-TRP PDCCH can also be configured with a single frequency network (SFN) method, that is, one CORESET is configured with two TCI states, and any one PDCCH candidate of the CORESET is associated with two TCI states.

**In** an embodiment, if the PDCCH is a channel configured with M-TRP, and other channels, i.e., PUCCH, PUSCH and PDSCH are configured with the S-TRP transmission, the first indication information may be indication information used to indicate a unified TCI state or an indicated TCI state, that is, the indication information is used to indicate at least one set of TCI states of at least one channel. For example, the first indication information is used to indicate the TCI state of the PDCCH, but the TCI state can be applicable to at least one CORESET. The second indication information may also be indication information used to indicate a unified TCI state or an indicated TCI state, that is, the indication information is used to indicate the TCI state of at least one channel. For example, the second indication information is used to indicate the TCI state applicable to PDSCH, PUCCH and PUSCH. Each set of TCI states indicated by the first indication information and the second indication information includes a joint TCI state, or at least one of a separate DL TCI state or a separate UL TCI state. And the first indication information and the second indication information may be MAC CE respectively, or include MAC CE and DCI.

**In** another embodiment, if the PDCCH is a channel configured with M-TRP, and other channels, i.e., PUCCH, PUSCH and PDSCH are configured with the S-TRP transmission, the first indication information may be indication information used to indicate the TCI state of one or two CORESETs associated with the PDCCH, and the indication information needs to indicate the CORESET ID associated with the CORESET. The second indication information may be indication information used to indicate a unified TCI state or an indicated TCI state, that is, the indication information is used to indicate the TCI state of at least one channel. For example, the second indication information is used to indicate the TCI state applicable to PDSCH, PUCCH and PUSCH. Each set of TCI states indicated by the first indication information and the second indication information includes a joint TCI state, or at least one of a separate DL TCI state or a separate UL TCI state. And the first indication information is MAC CE. The second indication information may be MAC CE, or include MAC CE and DCI.

In the disclosure, after receiving the first indication information indicating at least two sets of TCI states and the second indication information indicating one set of TCI states sent by the network device, the terminal can determine, for the channel with the configuration type indicating based on multiple sets of TCI states, that the TCI state for its transmission is the at least two sets of TCI states indicated by the first indication information, and determine, for the channel with the configuration type indicating based on one set of TCI states, that the TCI state for its transmission is the set of TCI states indicated by the second indication information. As a result, the TCI state for the transmission of the channel and/or the signal determined by the terminal is consistent with that determined by the network device, thus ensuring transmission reliability and improving transmission quality.

Reference is now made to FIG. 7, which is a schematic flowchart of a method for determining a TCI state provided by an embodiment of the present disclosure. As shown in FIG. 7, the method is performed by a network device, and may include, but is not limited to, the following steps.

At step 701, first indication information is sent to a terminal. The first indication information is configured to indicate at least two sets of TCI states.

A set of TCI states refers to one TCI state, or a pair of TCI states. For example, a set of TCI states can be a joint TCI state (also referred as to DLorjointTCIstate), or a separate downlink (DL) TCI state, or a separate uplink (UL) TCI state; or can be a separate DL TCI state and a separate UL TCI state, etc., which is not limited in the present disclosure.

Optionally, the first indication information may be a medium access control (MAC) control element (CE), that is, at least two sets of TCI states associated with a codepoint are activated through the MAC CE.

Optionally, the first indication information may also be MAC CE and DCI. In other words, at least one set of TCI states associated with each of multiple codepoints is directly activated through the MAC CE, and the DCI indicates one of the multiple codepoints, and the one codepoint is associated with at least two sets of TCI states.

At step 702, a TCI state for a transmission of a channel and/or a signal is determined according to a configuration for the channel and/or the signal in the terminal.

The channel includes at least one of the following: a PDCCH, a PDSCH, a PUCCH, or a PUSCH. The signal includes at least one of the following: a channel state information reference signal (CSI RS) or a sounding reference signal (SRS).

Optionally, each of the above signals can be any of the following types: periodic, semi-persistent, or aperiodic.

In addition, at least one set of TCIs in the at least two sets of TCI states indicated by the first indication information includes a joint TCI state (also referred to as DLorjointTCIstate), that is, the joint TCI state can be used for both uplink and downlink channels/reference signals.

Alternatively, at least one set of TCIs in the at least two sets of TCI states includes a separate UL TCI state and/or a separate DL TCI state.

The configuration for the channel and/or the signal in the terminal is used to describe whether the channel and signal are transmitted based on one set of TCI states or based on multiple sets of TCI states.

Optionally, in the disclosure, according to the number of transmission reception points (TRPs) configured by the channel and/or the signal, its configuration may be determined. For example, if the CSI RS and SRS are respectively configured with a single (S) TRP, it can be determined that their configuration indicates a transmission based on one set of TCI states; or if the PDCCH channel is configured with multiple (M) TRPs, then it can be determined that the configuration of the PDCCH indicates a transmission based on multiple sets of TCI states, or the like.

Optionally, each of the above signals can be transmitted based on S-TRP, that is, the configuration of each signal indicates the transmission based on one set of TCI states.

Optionally, for a channel configured with multiple sets of TCI states, it may be directly determined that the TCI states used for a transmission on the channel are at least two sets of TCI states indicated by the first indication information.

For the configuration indicating the transmission based on one set of TCI states, one set of TCI states for the transmission can be determined from at least two sets of TCI states indicated by the first indication information. For example, a specified set of TCI states in the first indication information may be determined as the TCI state for the transmission of the channel and/or the signal.

In the disclosure, after indicating at least two sets of TCI states to the terminal, the network device can determine the TCI state for its transmission according to the configuration of the channel and/or the signal in the terminal. As a result, the TCI state for the transmission of the channel and/or the signal determined by the terminal is consistent with that determined by the network device, thus ensuring transmission reliability and improving transmission quality.

Reference is now made to FIG. 8, which is a schematic flowchart of a method for determining a TCI state provided by an embodiment of the present disclosure. As shown in FIG. 8, the method is performed by a terminal device, and may include, but is not limited to, the following steps.

At step 801, first indication information is sent to a terminal. The first indication information is configured to indicate at least two sets of TCI states.

For the specific implementation of the above step 801, reference can be made to the detailed description of any embodiment of the present disclosure, and will not be described again here.

At step 802, in response to a configuration for a channel and/or a signal in the terminal indicating a transmission based on one set of TCI states, a specified set of TCI states in the at least two sets of TCI states is determined as a TCI state for a transmission of the channel and/or the signal.

Optionally, the specified TCI state may be any of the following: a first set of TCI states in the first indication information, or a set of TCI states associated with a specified group identity document (ID).

The first set of TCI states may be a set of TCI states located at a least bit field position in the first indication information.

For example, the first set of TCI states may be a set of TCI states located at the least bit field position in the MAC CE.

Alternatively, the first set of TCI states may also be a set of TCI states with a smallest TCI state ID in the first indication information.

Optionally, the first indication information includes a group identity document (ID) or index associated with each set of TCI states. Therefore, after receiving the first indication information, the terminal can determine the set of TCI states associated with a specified group ID in the first indication information as the TCI state for the transmission of the channel and/or the signal based on one set of TCI states.

The group ID includes at least one of the following: a control resource set (CORESET) pool index, a CORESET group ID, a PUCCH group ID, a PUSCH group ID, or a PDSCH group ID.

That is to say, the first indication information may include the CORESET Pool Index or CORESET group ID or PUCCH group ID or PUSCH group ID or PDSCH group ID associated with each set of TCI states.

In the disclosure, after indicating at least two sets of TCI states to the terminal, the network device can determine, for the channel and/or the signal with the configuration indicating based on one set of TCI states in the terminal, that the TCI state for its transmission is a specified set of TCI states in the at least two sets of TCI states. As a result, the TCI state for the transmission of the channel and/or the signal determined by the terminal is consistent with that determined by the network device, thus ensuring transmission reliability and improving transmission quality.

Reference is now made to FIG. 9, which is a schematic flowchart of a method for determining a TCI state provided by an embodiment of the present disclosure. As shown in FIG. 9, the method is performed by a network device, and may include, but is not limited to, the following steps.

At step 901, first indication information is sent to a terminal. The first indication information is configured to indicate at least two sets of TCI states.

For the specific implementation of the above step 901, reference can be made to the detailed description of any embodiment of the present disclosure, and will not be described again here.

At step 902, in response to a configuration for any one channel indicating a transmission based on multiple sets of TCI states, the at least two sets of TCI states are determined as TCI states for a transmission of the any one channel.

Optionally, among PDCCH, PDSCH, PUCCH and PUSCH, the configuration for at least one channel may indicate the transmission based on one set of TCI states, or the configuration for at least one channel may also indicate the transmission based on multiple sets of TCI states.

For example, the combination of configurations for respective channels can be as follows: S-TRP PDCCH and M-TRP PDSCH; S-TRP PDSCH and M-TRP PDCCH; S-TRP PDCCH and M-TRP PUSCH; S-TRP PUSCH and M-TRP PDCCH; S TRP PUSCH and M-TRP PDSCH; S-TRP PDSCH and M-TRP PUSCH; S-TRP PDCCH, M-TRP PDSCH and M-TRP PUSCH; S-TRP PDCCH, M-TRP PDSCH and M-TRP PUCCH; S-TRP PDCCH, S-TRP PUCCH, M-TRP PDSCH and M-TRP PUSCH; S-TRP PDCCH, M-TRP PUCCH, M-TRP PDSCH and M-TRP PUSCH, etc.

The M-TRP PDCCH refers to that the PDCCH can be configured with two search space (SS) sets with a link relationship. The PDCCH candidates with the same PDCCH candidate number in the two SS sets are used to transmit one PDCCH. Each SS set is associated with its respective CORESET. Alternatively, M-TRP PDCCH can also be configured with a single frequency network (SFN) method, that is, one CORESET is configured with two TCI states, and any one PDCCH candidate of the CORESET is associated with two TCI states.

The M-TRP PDSCH refers to that the PDSCH is configured with a repetition scheme or a repetition number or two code division multiplexing (CDM) groups. The repetition scheme includes at least one of the following: frequency division multiplexing (FDM) scheme A, FDM scheme B, or time division multiplexing (TDM) scheme A.

The M-TRP PUSCH refers to that the PUSCH is associated with at least one of the following: two SRS resource indicators, two layer fields, two PUSCH precoder fields or two SRS resource sets.

The M-TRP PUCCH refers to that the PUCCH is associated with at least one of the following: two spatial relationship information (spatial-relation-info), two TCI states (including separate UL TCI state or a joint TCI state) or two power control parameter sets.

For different combinations of configurations of channels, the terminal can use different methods to determine the TCI state for the transmission of the channel based on one set of TCI states.

For example, if among the above four channels, the configuration of each channel is based on multiple sets of TCI states, the terminal can determine at least two sets of TCI states indicated by the first indication channel as TCI states for the transmission of each channel.

In the disclosure, after indicating at least two sets of TCI states to the terminal, the network device can determine, for the channel with the configuration indicating the transmission based on multiple sets of TCI states in the terminal, that the TCI state for its transmission is the indicated at least two sets of TCI states. As a result, the TCI state for the transmission of the channel and/or the signal determined by the terminal is consistent with that determined by the network device, thus ensuring transmission reliability and improving transmission quality.

Reference is now made to FIG. 10, which is a schematic flowchart of a method for determining a TCI state provided by an embodiment of the present disclosure. As shown in FIG. 10, the method is performed by a network device, and may include, but is not limited to, the following steps.

At step 1001, first indication information is sent to a terminal. The first indication information is configured to indicate at least two sets of TCI states.

For the specific implementation of the above step 1001, reference can be made to the detailed description of any embodiment of the present disclosure, and will not be described again here.

At step 1002, in response to a configuration for any one channel indicating a transmission based on one set of TCI states, one set of TCI states with an associated group ID the same as a group ID associated with the any one channel in the at least two sets of TCI states is determined as a TCI state for a transmission of the any one channel.

For example, if a configuration of the PDCCH is S-TRP and the first indication information includes the group ID associated with each set of TCI states, then it can be determined that the set of TCI states whose associated group ID is the same as the group ID associated with the PDCCH is the TCI state for a transmission of the PDCCH.

Optionally, if the configuration for the channel indicates a transmission based on one set of TCI states for at least one first channel, and a transmission based on multiple sets of TCI states for at least one second channel, it can be determined that at least two sets of TCI states are the TCI state for a transmission of the at least one second channel, and a set of TCI states for a transmission of the at least one first channel is determined based on additional information.

For example, the configuration for the channel may be any of the following combinations: the configuration of the PDCCH indicates a transmission based on multiple sets of TCI states, and the configuration of at least one of the remaining channels indicates a transmission based on one set of TCI states; or the configuration of the PDSCH indicates a transmission based on multiple sets of TCI states, and the configuration of the PUSCH and/or PUCCH indicates a transmission based on one set of TCI state; or, the configuration of the PUSCH and/or PUCCH indicates a transmission based on multiple sets of TCI state, and the configuration of the PDSCH indicates a transmission based on one set of TCI state; or, the configuration of the PUSCH indicates a transmission based on multiple sets of TCI state, and the configuration of the PUCCH indicates a transmission based on one set of TCI state; or the configuration of the PUSCH indicates a transmission based on one set of TCI state, and the configuration of the PUCCH indicates a transmission based on multiple sets of TCI state, etc.

It should be noted that the above combination is only a schematic description and cannot be used as a restrictive description of determining the TCI state for the transmission of the channel in the disclosure.

Optionally, the additional information may be any of the following: a group ID associated with at least one channel; a codepoint value in an indication field for indicating an SRS resource set index in DCI; information indicated by used an information field for indicating downlink assignment in the DCI; information indicated by a newly added information field in the DCI.

Optionally, the additional indication information may also be MAC CE or RRC. The additional indication information may also be other information fields in the first indication information.

For example, when the configuration of the PUSCH is S-TRP, the additional indication information may reuse the codepoint value in the indication field in DCI format 0_1 and DCI format 0_2 that is used to indicate the SRS resource set index. The set of TCI states indicated by the codepoint value is used for the PUSCH transmission. For example, the codepoint value indicates that the SRS resource indicator field and precoding information and number of layers field is associated with the first SRS resource set, it means that the first set of TCI states is used. If the codepoint value indicates that the SRS resource indicator field and precoding information and number of layers field is associated with the second SRS resource set, it means that the second set of TCI states is used, or vice versa.

Or, when the configuration of the PDSCH is S-TRP, and the first indication information is DCI format 1_1 and 1_2, and there is no downlink configuration (i.e., without DL assignment), the information field used to indicate DL assignment in the DCI can be reused to indicate which set of TCI states is used for the PDSCH.

Alternatively, when the first indication information is DCI format 1_1 and 1_2 with DL assignment, a new indication field may also be added to indicate which set of TCI states is used for the channel based on one set of TCI states.

In the disclosure, after receiving at least two sets of TCI states indicated by the network device, the terminal can determine, for the channel with the configuration indicating the transmission based on multiple sets of TCI states, that the TCI state for its transmission is the indicated at least two sets of TCI states. As a result, the TCI state for the transmission of the channel and/or the signal determined by the terminal is consistent with that determined by the network device, thus ensuring transmission reliability and improving transmission quality.

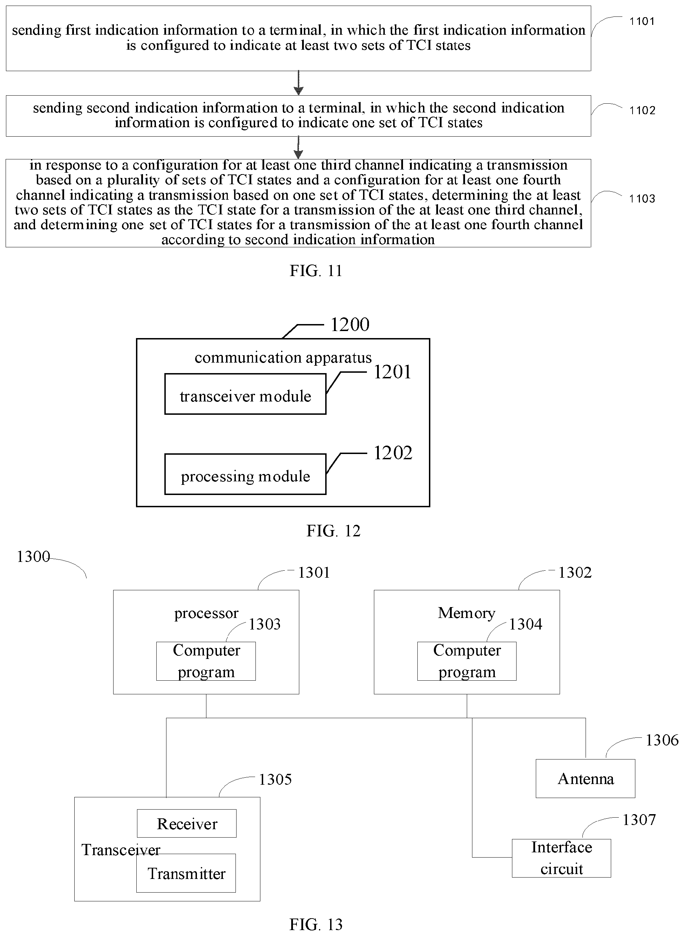

Reference is now made to FIG. 11, which is a schematic flowchart of a method for determining a TCI state provided by an embodiment of the present disclosure. As shown in FIG. 11, the method is performed by a network device, and may include, but is not limited to, the following steps.

At step 1101, first indication information is sent to a terminal. The first indication information is configured to indicate at least two sets of TCI states.

For the specific implementation of the above step 1101, reference can be made to the detailed description of any embodiment of the present disclosure, and will not be described again here.

At step 1102, second indication information is sent to the terminal. The second indication information is configured to indicate one set of TCI states.

The first indication information and/or the second indication information may respectively be any one of the following: MAC CE; DCI and MAC CE. The manner in which different types of indication information indicate the TCI state may refer to the description of any embodiment of the present disclosure, and will not be described again here.

At step 1103, in response to a configuration for at least one third channel indicating a transmission based on multiple sets of TCI states and a configuration for at least one fourth channel indicating a transmission based on one set of TCI states, the at least two sets of TCI states are determined as TCI states for a transmission of the third channel, and a set of TCI states for the a transmission of the at least one fourth channel transmission is determined according to the second indication information.

In the disclosure, if the network device sends both the second indication information indicating one set of TCI states and the first indication information indicating at least two sets of TCI states to the terminal, the network device can determine the one set of TCI states in the second indication information as the TCI state for the transmission of the fourth channel, and the at least two sets of TCI states in the first indication information as TCI states for the transmission of the third channel.

The at least one channel with the configuration indication the transmission based on multiple sets of TCI states can be at least one of PDCCH, PUCCH, PDSCH, or PUSCH. Correspondingly, in the remaining channels other than the above at least one channel with the configuration indication the transmission based on multiple sets of TCI states, the configuration of at least one channel can indicate the transmission based on one set of TCI states. The above four channels are respectively configured with the transmission based on several sets of TCI states, which can be arbitrarily combined as needed, and not limited in the disclosure.

For example, if the configuration of the PDCCH is M-TRP, the PDCCH may be configured with two search space (SS) sets with a link relationship, and the PDCCH candidates with the same PDCCH candidate number in the two SS sets are used for transmitting one PDCCH, each SS set is associated with its respective CORESET. Alternatively, the M-TRP PDCCH can also be configured with a single frequency network (SFN) method, that is, one CORESET is configured with two TCI states, and any one PDCCH candidate of the CORESET is associated with two TCI states.

In an embodiment, if the PDCCH is a channel configured with M-TRP, and other channels, i.e., PUCCH, PUSCH and PDSCH are configured with the S-TRP transmission, the first indication information may be indication information used to indicate a unified TCI state or an indicated TCI state, that is, the indication information is used to indicate at least one set of TCI states of at least one channel. For example, the first indication information is used to indicate the TCI state of the PDCCH, but the TCI state can be applicable to at least one CORESET. The second indication information may also be indication information used to indicate a unified TCI state or an indicated TCI state, that is, the indication information is used to indicate the TCI state of at least one channel. For example, the second indication information is used to indicate the TCI state applicable to PDSCH, PUCCH and PUSCH. Each set of TCI states indicated by the first indication information and the second indication information includes a joint TCI state, or at least one of a separate DL TCI state or a separate UL TCI state. And the first indication information and the second indication information may be MAC CE respectively, or include MAC CE and DCI.

In another embodiment, if the PDCCH is a channel configured with M-TRP, and other channels, i.e., PUCCH, PUSCH and PDSCH are configured with the S-TRP transmission, the first indication information may be indication information used to indicate the TCI state of one or two CORESETs associated with the PDCCH, and the indication information needs to indicate the CORESET ID associated with the CORESET. The second indication information may be indication information used to indicate a unified TCI state or an indicated TCI state, that is, the indication information is used to indicate the TCI state of at least one channel. For example, the second indication information is used to indicate the TCI state applicable to PDSCH, PUCCH and PUSCH. Each set of TCI states indicated by the first indication information and the second indication information includes a joint TCI state, or at least one of a separate DL TCI state or a separate UL TCI state. And the first indication information is MAC CE. The second indication information may be MAC CE, or include MAC CE and DCI.

In the disclosure, after sending the first indication information indicating at least two sets of TCI states and the second indication information indicating one set of TCI states to the terminal, the network device can determine, for the channel with the configuration type indicating based on multiple sets of TCI states, that the TCI state for its transmission is the at least two sets of TCI states indicated by the first indication information, and determine, for the channel with the configuration type indicating based on one set of TCI states, that the TCI state for its transmission is the set of TCI states indicated by the second indication information. As a result, the TCI state for the transmission of the channel and/or the signal determined by the terminal is consistent with that determined by the network device, thus ensuring transmission reliability and improving transmission quality.

As shown in FIG. 12, FIG. 12 is a schematic diagram of a communication apparatus 1200 provided in an embodiment of the disclosure. The communication apparatus 1200 shown in FIG. 12 may include a transceiver module 1201. The transceiver module 1201 may include a sending module and/or a receiving module. The sending module is used to implement a sending function, and the receiving module is used to implement a receiving function. The transceiver module 1201 can implement the sending function and/or the receiving function.

The communication apparatus 1200 may be a terminal, an apparatus in the terminal, or an apparatus capable of being used together with the terminal.

The communication apparatus 1200 is on the terminal side.

The transceiver module 1201 is configured to receive first indication information, in which the first indication information is configured to indicate at least two sets of TCI states.

The processing module 1202 is configured to determine, according to a configuration for a channel and/or a signal, a TCI state for a transmission of the channel and/or the signal.

Optionally, the apparatus further includes:
at least one set of TCI states in the at least two sets of TCI states includes one joint TCI state; or
at least one set of TCI states in the at least two sets of TCI states includes a separate uplink (UL) TCI state and/or a separate downlink (DL) TCI state.

Optionally, the processing module 1202 is configured to:
determine a specified set of TCI states in the at least two sets of TCI states as the TCI state for the transmission of the channel and/or the signal, in response to the configuration for the channel and/or the signal indicating a transmission based on one set of TCI states; or
determine the at least two sets of TCI states as the TCI state for a transmission of any one channel, in response to a configuration for the any one channel indicating a transmission based on a plurality of sets of TCI states.

Optionally, the specified TCI state includes any one of:
a first set of TCI states in the first indication information; or
one set of TCI states associated with a specified group identity document (ID).

Optionally, the first set of TCI states is one set of TCI states located at a least bit field position in the first indication information; or the first set of TCI states is one set of TCI states with a smallest TCI state ID in the first indication information.

Optionally, the first indication information includes a group ID associated with each set of TCI states.

Optionally, the group ID includes at least one of:
a control resource set (CORESET) pool index, a CORESET group ID, a physical uplink control channel (PUCCH) group ID, a physical uplink shared channel (PUSCH) group ID, or a physical downlink shared channel (PDSCH) group ID.

Optionally,
the channel includes at least one of: a physical downlink control channel (PDCCH), a PDSCH, a PUCCH, or a PUSCH;
the signal includes at least one of: a channel state information reference signal (CSI RS) or a sounding reference signal (SRS).

Optionally, a configuration for at least one channel in the channel indicates a transmission based on one set of TCI states, or the configuration for at least one channel indicates a transmission based on a plurality of sets of TCI states.

Optionally, the processing module 1202 is configured to:
determine, in the at least two sets of TCI states, one set of TCI states with an associated group ID the same as a group ID associated with any one channel as the TCI state for a transmission of the any one channel, in response to a configuration for the any one channel indicating a transmission based on one set of TCI states

Optionally, the processing module 1202 is configured to:
in response to the configuration for the channel indicating a transmission based on one set of TCI states for at least one first channel and a transmission based on a plurality of sets of TCI states for at least one second channel, determine the at least two sets of TCI states as the TCI state for a transmission of the at least one second channel, and determine one set of TCI states for a transmission of the at least one first channel according to additional information.

Optionally, the additional information includes any one of:
a group ID associated with at least one channel;
a codepoint value in an indication field for indicating an SRS resource set index in downlink control information (DCI);
information indicated by an information field for indicating downlink assignment in the DCI; or
information indicated by a newly-added information field in the DCI.

Optionally, the processing module 1202 is configured to:
in response to a configuration for at least one third channel indicating a transmission based on a plurality of sets of TCI states and a configuration for at least one fourth channel indicating a transmission based on one set of TCI states, determine the at least two sets of TCI states as the TCI state for a transmission of the at least one third channel, and determine one set of TCI states for a transmission of the at least one fourth channel according to second indication information.

Optionally, the first indication information and/or the second indication information includes any one of: a media access control control element (MAC CE); or DCI and a MAC CE.

In the present disclosure, after the terminal receives at least two set of TCI states sent by a network device, the terminal may determine the TCI state for the transmission of the channel and/or the signal according to the configuration for the channel and/or the signal, so that the TCI state for the transmission of the channel and/or the signal determined by the terminal is consistent with that determined by the network device, thus ensuring transmission reliability and improving transmission quality.

It should be understood that, the communication apparatus 600 may be a network side device, an apparatus in the network side device, or an apparatus capable of being used together with the network side device.

The communication apparatus 1200 is on the network device side.

The transceiver module 1201 is configured to send first indication information to a terminal, in which the first indication information is configured to indicate at least two sets of TCI states.

The processing module 1202 is configured to determine, according to a configuration for a channel and/or a signal in the terminal, a TCI state for a transmission of the channel and/or the signal.

Optionally, the apparatus further includes:
at least one set of TCI states in the at least two sets of TCI states includes one joint TCI state; or
at least one set of TCI states in the at least two sets of TCI states includes a separate uplink (UL) TCI state and/or a separate downlink (DL) TCI state.

Optionally, the processing module 1202 is configured to:
determine a specified set of TCI states in the at least two sets of TCI states as the TCI state for the transmission of the channel and/or the signal, in response to the configuration for the channel and/or the signal indicating a transmission based on one set of TCI states; or
determine the at least two sets of TCI states as the TCI state for a transmission of any one channel, in response to a configuration for the any one channel indicating a transmission based on a plurality of sets of TCI states.

Optionally, the specified TCI state includes any one of:
a first set of TCI states in the first indication information; or
one set of TCI states associated with a specified group identity document (ID).

Optionally, the first set of TCI states is one set of TCI states located at a least bit field position in the first indication information; or the first set of TCI states is one set of TCI states with a smallest TCI state ID in the first indication information.

Optionally, the first indication information includes a group ID associated with each set of TCI states.

Optionally, the group ID includes at least one of:
a control resource set (CORESET) pool index, a CORESET group ID, a physical uplink control channel (PUCCH) group ID, a physical uplink shared channel (PUSCH) group ID, or a physical downlink shared channel (PDSCH) group ID.

Optionally,
the channel includes at least one of: a physical downlink control channel (PDCCH), a PDSCH, a PUCCH, or a PUSCH;
the signal includes at least one of: a channel state information reference signal (CSI RS) or a sounding reference signal (SRS).

Optionally, a configuration for at least one channel in the channel indicates a transmission based on one set of TCI states, or the configuration for at least one channel indicates a transmission based on a plurality of sets of TCI states.

Optionally, the processing module 1202 is configured to:
determine, in the at least two sets of TCI states, one set of TCI states with an associated group ID the same as a group ID associated with any one channel as the TCI state for a transmission of the any one channel, in response to a configuration for the any one channel indicating a transmission based on one set of TCI states

Optionally, the processing module 1202 is configured to:
in response to the configuration for the channel indicating a transmission based on one set of TCI states for at least one first channel and a transmission based on a plurality of sets of TCI states for at least one second channel, determine the at least two sets of TCI states as the TCI state for a transmission of the at least one second channel, and determine one set of TCI states for a transmission of the at least one first channel according to additional information.

Optionally, the additional information includes any one of:
a group ID associated with at least one channel;
a codepoint value in an indication field for indicating an SRS resource set index in downlink control information (DCI);
information indicated by an information field for indicating downlink assignment in the DCI; or
information indicated by a newly-added information field in the DCI.

Optionally, the processing module 1202 is configured to:
in response to a configuration for at least one third channel indicating a transmission based on a plurality of sets of TCI states and a configuration for at least one fourth channel indicating a transmission based on one set of TCI states, determine the at least two sets of TCI states as the TCI state for a transmission of the at least one third channel, and determine one set of TCI states for a transmission of the at least one fourth channel according to second indication information.

Optionally, the first indication information and/or the second indication information includes any one of: a media access control control element (MAC CE); or DCI and a MAC CE.

In the present disclosure, after the network device indicates at least two set of TCI states to the terminal, the network device may determine the TCI state for the transmission of the channel and/or the signal according to the configuration for the channel and/or the signal, so that the TCI state for the transmission of the channel and/or the signal determined by the terminal is consistent with that determined by the network device, thus ensuring transmission reliability and improving transmission quality.

As illustrated in FIG. 12, FIG. 13 is a schematic diagram of a communication apparatus 1300 provided by an embodiment of the disclosure. The communication apparatus 1300 may be a network device, or may be an auxiliary communication device, or may be a terminal, or may be a chip, a chip system or a processor that supports the network side device to realize the above-described methods, or may be a chip, a chip system or a processor that supports the auxiliary communication device to realize the above-described methods, or may be a chip, a chip system or a processor that supports the terminal to realize the above-described methods. The apparatus may be used to realize the methods described in the above method embodiments with reference to the description of the above-described method embodiments.

The communication apparatus 1300 may include one or more processors 1301. The processor 1301 may be a general purpose processor or a dedicated processor, such as, a baseband processor or a central processor. The baseband processor is used for processing communication protocols and communication data. The central processor is used for controlling the communication apparatus (e.g., base station, baseband chip, terminal, terminal chip, DU, or CU), executing computer programs, and processing data of the computer programs.

Optionally, the communication apparatus 1300 may also include one or more memories 1302 on which computer programs 1304 may be stored. The processor 1301 executes the computer programs 1304 to cause the communication apparatus 1300 to perform the methods described in the above method embodiments. Optionally, data may also be stored in the memory 1302. The communication device 1300 and the memory 1302 may be provided separately or may be integrated together.

Optionally, the communication apparatus 1300 may also include a transceiver 1305 and an antenna 1306. The transceiver 1305 may be referred to as transceiver unit, transceiver machine, or transceiver circuit, for realizing the transceiver function. The transceiver 1305 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1300 may also include one or more interface circuits 1307. The interface circuits 1307 are used to receive code instructions and transmit them to the processor 1301. The processor 1301 runs the code instructions to cause the communication device 1300 to perform the method described in the method embodiments.

The communication apparatus 1300 is a terminal, the transceiver 1301 is used to execute the step S202 in FIG. 2, the step S301 in FIG. 3, the step S401 in FIG. 4. The processor 1301 is used to execute the step S202 in FIG. 2, the step S302 in FIG. 3, the step S402 in FIG. 4.

The communication apparatus 1300 is a network device, the transceiver 1305 is used to execute the step S701 in FIG. 7, the step S801 in FIG. 8, the step S901 in FIG. 9. The processor 1301 is used to execute the step S702 in FIG. 7, the step S802 in FIG. 8.

In an implementation, the processor 1301 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

**In** an implementation, the processor 1301 may stores computer programs. The computer programs are executed on the processor 1301, to cause the communication apparatus 1300 to perform the methods described in the above method embodiments. The computer programs 1303 may be solidified in the processor 1301, in which case the processor 1301 may be implemented by hardware.

In an implementation, the communication apparatus 1300 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network device, a terminal or an auxiliary communication device, but the scope of the communication apparatus described in the disclosure is not limited thereto, and the structure of the communication apparatus may not be limited by FIG. 13. The communication apparatus may be a stand-alone device or may be part of a larger device. For example, the communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

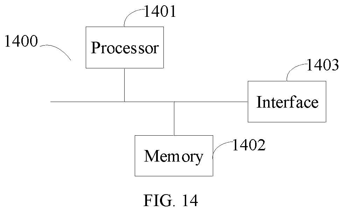

The case where the communication apparatus is a chip or a chip system may be referred to the schematic diagram of a chip shown in FIG. 14. In FIG. 14, the chip includes a processor 1401 and an interface 1403. There may be one or more processors 1401, and there may be multiple interfaces 1403.

For the case where the chip is used to implement the functions of the terminal in the embodiments of the disclosure,
the interface 1403 is configured to execute the step S202 in FIG. 2, the step S301 in FIG. 3, the step S401 in FIG. 4; and the processor 1401 is configured to execute the step S202 in FIG. 2, the step S302 in FIG. 3, the step S402 in FIG. 4.

For the case where the chip is used to implement the functions of the network device in the embodiments of the disclosure,
the interface 1403 is configured to execute the step S701 in FIG. 7, the step S801 in FIG. 8, the step S901 in FIG. 9; and the processor 1401 is configured to execute the step S702 in FIG. 7, the step S802 in FIG. 8.

Optionally, the chip further includes a memory 1403 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The foregoing are only specific implementations of the disclosure, but the scope of protection of the disclosure is not limited thereto. Any technician skilled in the art can easily think of variations or substitutions within the technical scope disclosed in the disclosure, and the variations or substitutions shall be covered by the scope of protection of the disclosure. Therefore, the scope of protection of the disclosure only be limited by the appended claims.

## Claims

1. A method for determining a transmission configuration indication (TCI) state, performed by a terminal, the method comprising:
receiving first indication information, wherein the first indication information is configured to indicate at least two sets of TCI states; and
determining, according to a configuration for a channel and/or a signal, a TCI state for a transmission of the channel and/or the signal.

2. The method according to claim 1, further comprising:
at least one set of TCI states in the at least two sets of TCI states comprises one joint TCI state; or
at least one set of TCI states in the at least two sets of TCI states comprises a separate uplink (UL) TCI state and/or a separate downlink (DL) TCI state.

3. The method according to claim 1, wherein determining, according to the configuration for the channel and/or the signal, the TCI state for the transmission of the channel and/or the signal comprises:
determining a specified set of TCI states in the at least two sets of TCI states as the TCI state for the transmission of the channel and/or the signal, in response to the configuration for the channel and/or the signal indicating a transmission based on one set of TCI states; or
determining the at least two sets of TCI states as the TCI state for a transmission of any one channel, in response to a configuration for the any one channel indicating a transmission based on a plurality of sets of TCI states.

4. The method according to claim 3, wherein the specified TCI state comprises any one of:
a first set of TCI states in the first indication information; or
one set of TCI states associated with a specified group identity document (ID).

5. The method according to claim 4, wherein
the first set of TCI states is one set of TCI states located at a least bit field position in the first indication information; or the first set of TCI states is one set of TCI states with a smallest TCI state ID in the first indication information.

6. The method according to claim 1, wherein the first indication information comprises a group ID associated with each set of TCI states.

7. The method according to claim 4 or 6, wherein the group ID comprises at least one of:
a control resource set (CORESET) pool index, a CORESET group ID, a physical uplink control channel (PUCCH) group ID, a physical uplink shared channel (PUSCH) group ID, or a physical downlink shared channel (PDSCH) group ID.

8. The method according to any one of claims 1 to 7, wherein
the channel comprises at least one of: a physical downlink control channel (PDCCH), a PDSCH, a PUCCH, or a PUSCH;
the signal comprises at least one of: a channel state information reference signal (CSI RS) or a sounding reference signal (SRS).

9. The method according to claim 8, wherein a configuration for at least one channel in the channel indicates a transmission based on one set of TCI states, a configuration for at least another channel indicates a transmission based on a plurality of sets of TCI states.

10. The method according to claim 9, wherein determining, according to the configuration for the channel and/or the signal, the TCI state for the transmission of the channel and/or the signal comprises:
determining, in the at least two sets of TCI states, one set of TCI states with an associated group ID the same as a group ID associated with any one channel as the TCI state for a transmission of the any one channel, in response to a configuration for the any one channel indicating the transmission based on one set of TCI states.

11. The method according to claim 9, wherein determining, according to the configuration for the channel and/or the signal, the TCI state for the transmission of the channel and/or the signal comprises:
in response to the configuration for the channel indicating the transmission based on one set of TCI states for at least one first channel and the transmission based on a plurality of sets of TCI states for at least one second channel, determining the at least two sets of TCI states as a TCI state for a transmission of the at least one second channel, and determining one set of TCI states for a transmission of the at least one first channel according to additional information.

12. The method according to claim 11, wherein the additional information comprises any one of:
a group ID associated with at least one channel;
a codepoint value in an indication field for indicating an SRS resource set index in downlink control information (DCI);
information indicated by an information field for indicating downlink assignment in the DCI; or
information indicated by a newly-added information field in the DCI.

13. The method according to claim 9, wherein determining, according to the configuration for the channel and/or the signal, the TCI state for the transmission of the channel and/or the signal comprises:
in response to a configuration for at least one third channel indicating a transmission based on a plurality of sets of TCI states and a configuration for at least one fourth channel indicating a transmission based on one set of TCI states, determining the at least two sets of TCI states as the TCI state for a transmission of the at least one third channel, and determining one set of TCI states for a transmission of the at least one fourth channel according to second indication information.

14. The method according to any one of claims 1-13, wherein the first indication information and/or the second indication information comprises any one of:
a media access control control element (MAC CE); or
DCI and a MAC CE.

15. A method for determining a transmission configuration indication (TCI) state, performed by a network device, the method comprising:
sending first indication information to a terminal, wherein the first indication information is configured to indicate at least two sets of TCI states; and
determining, according to a configuration for a channel and/or a signal in the terminal, a TCI state for a transmission of the channel and/or the signal.

16. The method according to claim 15, further comprising:
at least one set of TCI states in the at least two sets of TCI states comprises one joint TCI state; or
at least one set of TCI states in the at least two sets of TCI states comprises a separate uplink (UL) TCI state and/or a separate downlink (DL) TCI state.

17. The method according to claim 15, wherein determining, according to the configuration for the channel and/or the signal in the terminal, the TCI state for the transmission of the channel and/or the signal comprises:
determining a specified set of TCI states in the at least two sets of TCI states as the TCI state for the transmission of the channel and/or the signal, in response to the configuration for the channel and/or the signal indicating a transmission based on one set of TCI states; or
determining the at least two sets of TCI states as the TCI state for a transmission of any one channel, in response to a configuration for the any one channel indicating a transmission based on a plurality of sets of TCI states.

18. The method according to claim 17, wherein the specified TCI state comprises any one of:
a first set of TCI states in the first indication information; or
one set of TCI states associated with a specified group identity document (ID).

19. The method according to claim 18, wherein
the first set of TCI states is one set of TCI states located at a least bit field position in the first indication information; or the first set of TCI states is one set of TCI states with a smallest TCI state ID in the first indication information.

20. The method according to claim 18, wherein the first indication information comprises a group ID associated with each set of TCI states.

21. The method according to claim 18 or 20, wherein the group ID comprises at least one of:
a control resource set (CORESET) pool index, a CORESET group ID, a physical uplink control channel (PUCCH) group ID, a physical uplink shared channel (PUSCH) group ID, or a physical downlink shared channel (PDSCH) group ID.

22. The method according to any one of claims 15 to 21, wherein
the channel comprises at least one of: a physical downlink control channel (PDCCH), a PDSCH, a PUCCH, or a PUSCH;
the signal comprises at least one of: a channel state information reference signal (CSI RS) or a sounding reference signal (SRS).

23. The method according to claim 22, wherein a configuration for at least one channel in the channel indicates a transmission based on one set of TCI states, a configuration for at least another channel indicates a transmission based on a plurality of sets of TCI states.

24. The method according to claim 23, wherein determining, according to the configuration for the channel and/or the signal in the terminal, the TCI state for the transmission of the channel and/or the signal comprises:
determining, in the at least two sets of TCI states, one set of TCI states with an associated group ID the same as a group ID associated with any one channel as the TCI state for a transmission of the any one channel, in response to a configuration for the any one channel indicating a transmission based on one set of TCI states.

25. The method according to claim 23, wherein determining, according to the configuration for the channel and/or the signal, the TCI state for the transmission of the channel and/or the signal comprises:
in response to the configuration for the channel indicating the transmission based on one set of TCI states for at least one first channel and the transmission based on a plurality of sets of TCI states for at least one second channel, determining the at least two sets of TCI states as a TCI state for a transmission of the at least one second channel, and determining one set of TCI states for a transmission of the at least one first channel according to additional information.

26. The method according to claim 25, wherein the additional information comprises any one of:
a group ID associated with at least one channel;
a codepoint value in an indication field for indicating an SRS resource set index in downlink control information (DCI);
information indicated by an information field for indicating downlink assignment in the DCI; or
information indicated by a newly-added information field in the DCI.

27. The method according to claim 23, wherein determining, according to the configuration for the channel and/or the signal in the terminal, the TCI state for the transmission of the channel and/or the signal comprises:
in response to a configuration for at least one third channel indicating a transmission based on a plurality of sets of TCI states and a configuration for at least one fourth channel indicating a transmission based on one set of TCI states, determining the at least two sets of TCI states as the TCI state for a transmission of the at least one third channel, and determining one set of TCI states for a transmission of the at least one fourth channel according to second indication information.

28. The method according to any one of claims 15-27, wherein the first indication information and/or the second indication information comprises any one of:
a media access control control element (MAC CE); or
DCI and a MAC CE.

29. A communication apparatus, applied to a terminal, comprising:
a transceiver module, configured to receive first indication information, wherein the first indication information is configured to indicate at least two sets of TCI states; and
a processing module, configured to determine, according to a configuration for a channel and/or a signal, a TCI state for a transmission of the channel and/or the signal.

30. A communication apparatus, applied to a network device, comprising:
a transceiver module, configured to send first indication information to a terminal, wherein the first indication information is configured to indicate at least two sets of TCI states; and
a processing module, configured to determine, according to a configuration for a channel and/or a signal in the terminal, a TCI state for a transmission of the channel and/or the signal.

31. A communication apparatus comprising a processor and a memory, wherein the memory has computer programs stored therein, the processor is configured to execute the computer programs stored in the memory, to cause the communication apparatus to perform the method according to any of claims 1-14 or the method according to any of claims 15-28.

32. A computer-readable storage medium having instructions stored thereon; wherein when the instructions are executed, the method according to any one of claims 1-14 or the method according to any of claims 15-28 is implemented.
